(19) Europäisches Patentamt
European Patent Office
Office européen des brevets

(11) Veröffentlichungsnummer: **0 231 468**
**B1**

# (12) EUROPÄISCHE PATENTSCHRIFT

(45) Veröffentlichungstag der Patentschrift: **15.11.89**

(51) Int. Cl.⁴: **C08G 69/44**, C08G 69/42, C08G 73/14, C09K 19/38

(21) Anmeldenummer: **86116462.2**

(22) Anmeldetag: **27.11.86**

## (54) Flüssig-kristalline Carbamidgruppen enthaltende Polykondensate, deren Herstellung und Verwendung.

(30) Priorität: **04.12.85 DE 3542831**

(43) Veröffentlichungstag der Anmeldung: **12.08.87 Patentblatt 87/33**

(45) Bekanntmachung des Hinweises auf die Patenterteilung: **15.11.89 Patentblatt 89/46**

(84) Benannte Vertragsstaaten: **AT BE CH DE FR GB IT LI LU NL SE**

(56) Entgegenhaltungen:
**EP-A- 0 063 880**
**US-A- 4 473 681**

(73) Patentinhaber: **BASF Aktiengesellschaft, Carl-Bosch-Strasse 38, D-6700 Ludwigshafen(DE)**

(72) Erfinder: **Kock, Hans-Jakob, Dr., Bismarckstrasse 85, D-6700 Ludwigshafen(DE)**
Erfinder: **Hisgen, Bernd, Dr., Goethestrasse 6, D-6703 Limburgerhof(DE)**
Erfinder: **Portugall, Michael, Dr., Raiffeisenstrasse 7, D-6706 Wachenheim(DE)**

**EP 0 231 468 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der US-PS 4 219 461 werden flüssig-kristalline Polyester beschrieben, die aus 4-Hydroxybenzoesäure, 2,6-Hydroxynaphthalincarbonsäure, Hydrochinon und Terephthalsaäure aufgebaut sind. Solche Polyester sind im Hinblick auf ihre Wärmeformbeständigkeit jedoch verbesserungsbedürftig. Aus der DE-OS 3 325 705 sind flüssig-kristalline Polyester bekannt, die aus 4-Hydroxybenzoesäure, Terephthalsäure und/oder Isophthalsäure, 2,7-Dihydroxynaphthalin und gegebenenfalls Hydrochinon aufgebaut sind. Die dort beschriebenen Polyester weisen jedoch Glastemperaturen von nur 130°C auf. In der US-PS 4 330 457 werden Polyesteramide aufgebaut aus Hydroxinaphthalincarbonsäure, Terephthalsäure, Hydrochinon und p-Aminophenol beschrieben. Solche Polyesteramide haben jedoch eine Glastemperatur von etwa 105°C. Das gleiche gilt für die aus der US-PS 4 351 917 bekannten Polyesteramide, die aus p-Aminophenol, p-Hydroxibenzoesäure und Hydroxinaphthalincarbonsäure aufgebaut sind. In der US-PS 4 473 681 sind auch bereits Polyestercarbamide beschrieben, die aus Hydroxinaphtalincarbonsäure, Dihydroxyarylverbindung sowie N,N'-Bis(carboxyphenyl)harnstoff aufgebaut sind. Die erhaltenen Polyestercarbamide weisen mit einer Glasübergangstemperatur von 120°C keine ausreichende Wärmeformbeständigkeit auf.

Es war deshalb die technische Aufgabe gestellt, flüssig-kristalline mesomorphe Polykondensate zur Verfügung zu stellen, die leicht verarbeitbar sind und darüber hinaus eine hohe Wärmeformbeständigkeit sowie eine gute Abriebfestigkeit aufweisen.

Diese Aufgabe wird gelöst durch flüssig-kristalline Carbamidgruppen enthaltende Polykondensate aufgebaut aus

a) aromatischen Hydroxi- und/oder Aminocarbonsäuren, in denen die Hydroxyl- und Aminogruppe nicht vicinal zur Carboxylgruppe angeordnet sind,

b) 0,1 bis 20 Mol.-% Harnstoff,

c) aromatische Dihydroxy-, Diamino- und/oder Hydroxy-Aminoverbindungen, in denen die Hydroxy- und Aminogruppen nicht vicinal angeordnet sind,

d) einer der Summe der Komponenten b und c äquivalenten Menge an aromatischen Dicarbonsäure, in denen die Carboxylgruppen nicht vicinal angeordnet sind.

Die neuen Polykondensate haben den Vorteil, daß sie sich leicht verarbeiten lassen. Weiter haben die neuen Polykondensate den Vorteil, daß sie eine gegenüber vergleichbaren Kondensaten erhöhte Wärmeformbeständigkeit aufweisen. Zudem haben die neuen Kondensate gute mechanische Werte, insbesondere eine glatte abriebfeste Oberfläche. Darüber hinaus weisen sie eine geringere Abnahme des Schubmoduls mit steigender Temperatur auf.

Bevorzugte Polykondensate sind aufgebaut aus

a) mindestens einer Hydroxy- und/oder Aminobenzol- oder Hydroxy- und/oder Amino-Napthalincarbonsäure. Die Amino- bzw. Hydroxygruppen sind in den Benzolcarbonsäuren in 4- oder 3-Stellung angeordnet, während bei Napthalincarbonsäuren die Carboxylgruppe in 2-Stellung angeordnet ist und die Amino- bzw. Hydroxygruppen in 6- oder 7-Stellung. Der Anteil an Komponente a beträgt vorteilhaft >10 Mol.-%, insbesondere >20 Mol.-%.

b) 0,1 bis 20 Mol.-%, vorteilhaft 0,5 bis 15 Mol.-% Harnstoff,

c) aromatische Diamino-, Dihydroxy- und/oder Amino-Hydroxyverbindungen, die sich von ein- oder mehrkernigen Benzolringen ableiten, wie Phenylenresten, die direkt miteinander verbunden sein können oder über ein Sauterstoffatom und Schwefelatom eine $SO_2$-Gruppe, eine $CH_2$-Gruppe oder CO-Gruppe verbunden sein können, ferner mehrkernige Reste wie Naphthylenreste sowie Anthrachinoylenreste. In der Regel sind die reaktiven Hydroxy- und/oder Aminogruppen jeweils in entgegengesetzten Richtungen im Molekül angeordnet. Die Komponente b ist vorteilhaft in einer Menge von 10 bis 44 Mol.-% enthalten. Die aromatischen Reste können auch $C_1$- bis $C_4$-Alkylreste oder einen Phenylrest, ferner Halogenatome als laterale Substituenten enthalten.

d) Einer der Summe der Komponenten b und c äquivalenten Menge an Therephthalsäure, Isophthalsäure, Bis- (p- oder m-carboxyphenyl)carbonat oder deren Gemische.

Es versteht sich, daß sich die Summe der Molprozente aus den Komponenten a, b, c und d jeweils auf 100 Mol.-% ergänzt.

Besonders bevorzugte Polykondensate sind aufgebaut aus

a) mindestens 10 Mol.-% mindestens einer der wiederkehrenden Einheiten der Formeln I und/oder II

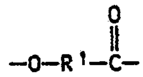 I

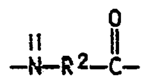 II

in denen $R^1$ und $R^2$ gleich oder verschieden sein können und jeweils einen 1,4-Phenylen- oder 1,3-Phenylenrest bezeichnen

b) 0,1 bis 20 Mol.-% wiederkehrenden Einheiten der Formel III

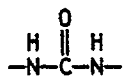 III

c) 15 bis 35 Mol.-% mindestens einer der wiederkehrenden Einheiten der Formel IV

$-X-R^3-Y-$ IV

in der $R^3$ einen 1,4-Phenylen-, 1,3-Phenylen-, 2,6-Naphthylen-, 2,7-Naphthylen-, 4,4'-Biphenylen-, 3,4-Biphenylen-, 2,6-Anthrachinoylenrest bezeichnet, die auch Halogenatome, Alkylreste mit 1 bis 4 Kohlenstoffatomen oder einen Phenylrest als Substituenten haben können oder $R^3$ den Rest

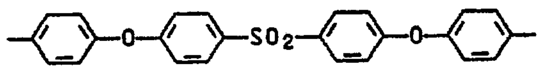

bezeichnet und X und Y gleich oder verschieden sein können und jeweils für Sauerstoff oder den Rest –NH– stehen, vorzugsweise in einer Menge von 15 bis 35 Mol.-%

d) einer der Summe aus den Komponenten b und c äquivalenten Menge an wiederkehrenden Einheiten der Formel V

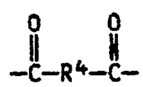 V

in der $R^4$ für einen 1,4-Phenylen-, 1,3-Phenylenrest oder Reste der Formeln VI und/oder VII

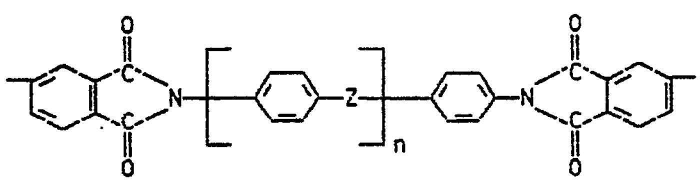 VI

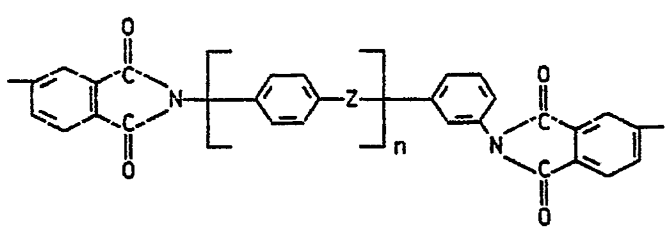 VII

in der Z jeweils für $-O-$, $-S-$, $-SO_2-$, $-CO-$, $-CH_2-$ oder $= C(CH_3)_2$, steht und n 0 oder 1 bedeutet, bezeichnet oder $R^4$ auch für Reste der

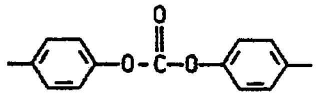

VIII

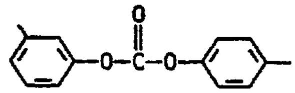

IX

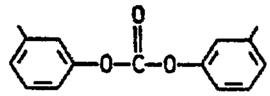

X

steht, wobei die Summe der Molprozente der Komponenten a, b, c und d jeweils 100 Mol.-% ergibt.

Geeignete Ausgangsstoffe für die Kompnente a sind beispielsweise 4-Hydroxybenzoesäure, 3-Hydroxybenzoesäure, 4-Aminobenzoesäure, 3-Aminobenzoesäure, 6-Hydroxynaphthalincarbonsäure-(2).

Als Ausgangsverbindung für die Komponente b wird Harnstoff verwendet.

Geeignete Komponenten c sind beispielsweise Hydrochinon, Resorcin, 2,6-Dihydroxynaphthalin, 2,7-Dihydroxynaphthalin, 4,4′-Piphenyl, 2,6-Dihydroxyanthrachinon, 4,4′-Di(p-hydroxyphenoxy)-diphenylsulfon oder sowie p-Phenylendiamin, m-Phenylendiamin, p-Aminophenol, m-Aminophenol oder 2,6-Diaminoanthrachinon.

Geeignete Komponenten d sind beispielsweise Terephthalsäure, Isophthalsäure, 4,4′-Bis[(4-carboxy)-N-phthalimido]-diphenylether, 4,4′-Bis[4-carboxy)-N-phthalimido]-diphenylmethan, 4,4′-Bis[(4-carboxy)-N-phthalimido]-diphenylsulfon, 4,4′-Bis[(4-carboxy)-N-phthalimido]-diphenylsulfid, 4,4′-Bis[(4-carboxy)-N-phthalimido]-diphenylketon, 3,4′-Bis[(4-carboxy)-N-phthalimido]-diphenylether, -sulfid, -sulfon, -keton, -methan, -propan oder Bis(p- oder m-carboxyphenyl)carbonat vorteilhaft in einer Menge bis zu 40 Mol.-% der angewandten Menge an Dicarbonsäuren.

Geeignete Polykondensate sind beispielsweise

1. vollaromatische mesomorphe Polyetherestercarbamide, aufgebaut aus

a) mindestens 10 Mol.-% 4-Hydroxy-benzoesäure

b) 0,5 bis 12 Mol.-% Harnstoff

$c_1$) 3 bis 20 Mol.-% Hydrochinon und/oder 4,4′-Dihydroxybiphenyl,

$c_2$) 5 bis 30 Mol.-% 4,4′-Di(p-hydroxyphenoxy)-diphenylsulfon,

d) einer der Summe der Komponenten b und c entsprechenden äquivalenten molaren Menge an Terephthalsäure.

2. Polyestercarbamide, aufgebaut aus

a) mindestens 10 Mol.-% 4-Hydroxy-benzoesäure

b) 0,1 bis 11 Mol.-% Harnstoff

$c_1$) 10 bis 25 Mol.-% 3,3′–5,5′-Tetramethyl-4,4′-dihydroxydiphenyl

$c_2$) 5 bis 15 Mol.-% Hydrochinon

$c_3$) 5 bis 15 Mol.-% 4,4′-Dihydroxybiphenyl

d) einer der Summe aus den Komponenten b und c entsprechenden molaren Menge an Terephthalsäure.

3. Polyestercarbamide, aufgebaut aus

a) mindestens 10 Mol.-% 4-Hydroxy-benzoesäure

b) 0,1 bis 7 Mol.-% Harnstoff

$c_1$) 5 bis 35 Mol.-% tert.-Butylhydrochinon

$c_2$) 2 bis 30 Mol.-% 4,4′-Dihydroxybiphenyl

d) einer der Summe aus b und c entsprechenden Menge an Terephthalsäure.

4. Polyesteramidcarbamide, aufgebaut aus

a) mindestens 10 Mol.-% 4-Hydroxy-benzoesäure, die teilweise durch 4-Aminobenzoesäure ersetzt sein kann

b) 0,4 bis 10 Mol.-% Harnstoff

$c_1$) 3 bis 30 Mol.-% tert.-Butylhydrochinon

$c_2$) 3 bis 30 Mol.-% 3-Aminophenol

$c_3$) 2 bis 25 Mol.-% mindestens eine der Verbindungen Hydrochinon, 4,4′-Dihydroxybiphenyl, Resorcin

d) einer der Summe aus den Komponenten b und c entsprechenden molaren Menge an Terephthalsäure, die teilweise durch Isophthalsäure ersetzt sein kann.

5. Polyesteramidcarbamide, aufgebaut aus

a) mindestens 10 Mol.-% 4-Hydroxybenzoesäure gegebenenfalls 5 bis 25 Mol.-% 3-Hydroxybenzoesäure

b) 0,1 bis 11 Mol.-% Harnstoff

$c_1$) 3 bis 30 Mol.-% 3-Aminophenol

$c_2$) 3 bis 25 Mol.-% mindestens eine der Verbindungen Hydrochinon, 4,4′-Dihydroxybiphenyl oder Resorcin

d) einer der Summe der Komponenten b und c entsprechenden molaren Menge an Terephthalsäure und/oder Isophthalsäure.

6. Polyetherestercarbamide, aufgebaut aus
a) mindestens 10 Mol.-% 4-Hydroxybenzoesäure
b) 0,1 bis 7 Mol.-% Harnstoff
$c_1$) 5 bis 20 Mol.-% 4,4'-Di(p-hydroxyphenoxy)-diphenylsulfon
$c_2$) 10 bis 30 Mol.-% tert.-Butylhydrochinon
d) einer der Summe der Komponenten b und c äquivalenten molaren Menge an Terephthalsäure.

7. Polyetheresterimidcarbamide, aufgebaut aus
a) mindestens 10 Mol.-% 4-Hydroxybenzoesäure
b) 0,1 bis 5 Mol.-% Harnstoff
$c_1$) 5 bis 35 Mol.-% 4,4'-Di(p-hydroxyphenoxy)-diphenylsulfon
$c_2$) einer der Summe aus dem Komponenten (d1 + d2) – (c1 + b) entsprechenden molaren Menge an Hydrochinon und/oder 4,4'-Dihydroxybiphenyl
$d_1$) 5 bis 35 Mol.-% 4,4'-Bis[(4-carboxy)-N-phthalimido]-diphenylethermethan, -sulfon, -sulfid, -keton oder -propan
$d_2$) 15 bis 30 Mol.-% Terephthalsäure.

8. Polyestercarbamide, aufgebaut aus
a) mindestens 20 Mol.-% 4-Hydroxybenzoesäure
b) 1 bis 10 Mol.-% Harnstoff
$c_1$) 5 bis 15 Mol.-% tert.-Butylhydrochinon
$c_2$) 5 bis 15 Mol.-% 4,4'-Dihydroxybiphenyl
d) einer der Summe der Komponenten b und c entsprechenden molaren Menge an Terephthalsäure.

Es versteht sich, daß sich in den vorgegebenen Polykondensaten die Komponenten jeweils auf 100 Mol.-% ergänzen.

Der flüssig-kristalline Zustand der Polykondensate kann mit dem Polarisationsmikroskop nach einer in der DE-AS 2 520 819 beschriebenen Methode nachgewisen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Bevorzugte Polykondensate nach der Erfindung haben eine Glasübergangstemperatur Tg von $\geq$ 100°C, vorzugsweise $\geq$ 140°C, gemessen mit der DSC-Methode, beschrieben in Makromolekulare Chemie, Band 127 (1969), Seiten 1 ff. Die bevorzugten Polykondensate bilden bei einer Temperatur < 400°C, insbesondere $\leq$ 385°C eine flüssig-kristalline fadenbildende Schmelze. Bevorzugt sind auch flüssig-kristalline Polykondensate, die bei einer Temperatur >220°C und $\leq$ 380°C Teilkristallinität aufweisen. Die Temperaturabhängigkeit des Schubmoduls wird nach DIN 53 445 bestimmt.

Die erfindungsgemäßen flüssig-kristallinen Polykondensate sind beispielsweise erhältlich durch analoge Arbeitsweisen, wie sie in der US-PS 4 375 530 und US-PS 4 118 372 beschrieben werden. Die Massekondensation umfaßt im allgemeinen eine Alkanoylierungsstufe, in der die eingesetzten Monomeren mit Säureanhydriden umgesetzt werden und eine Polymerisationsstufe, in der das Polykondensat unter Abspaltung von aliphatischen Carbonsäuren gebildet wird. Verfahren, bei denen eine Vorpolymerisationsstufe zwischengeschaltet wird, sind aus der DE-OS 3 320 118 zu entnehmen. Die beschriebenen Verfahren benötigen allerdings Reaktionszeiten von mehr als 10 Stunden.

Nach einer vorteilhaften Arbeitsweise erhält man die erfindungsgemäßen Polyestercarbamide in einem Einstufenverfahren, bei dem man die nicht derivatisierten Ausgangsstoffe im beschriebenen molaren Verhältnis unter Verwendung von Anhydriden niederer Fettsäuren z.B. Fettsäuren mit 2 bis 4 Kohlenstoffatomen, insbesondere Essigsäureanhydrid umsetzt. Es ist möglich, hierbei die üblichen Polykondensationskatalysatoren mitzuverwenden. Bei der Umsetzung werden die nicht derivatisierten Ausgangsstoffe zusammen mit Fettsäureanhydrid vorteilhaft mit einem mindestens 5%igen molaren Überschuß, bezogen auf die vorhandenen Hydroxy- und Aminogruppe unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden auf 130 bis 170°C. Anschließend wird die Temperatur innerhalb von 2 bis 21/2 Stunden auf 250 bis 350°C gesteigert. Hierbei werden überschüssige Fettsäureanhydride und Fettsäuren abdestilliert. Um die Reaktion zu vervollständigen, hat es sich als vorteilhaft erwiesen, gegen Ende der Umsetzung verminderten Druck z.B. von 0,5 bis 200 mbar anzuwenden.

Bemerkenswert und nicht vorherzusehen bei der Anwendung dieses Einstufenverfahrens ist zunächst die problemlose und vollständige Reaktion auch ohne Katalysatorzusatz zu den gewünschten Polymeren in einer relativ kurzen Zeit. Dies ist umso erstaunlicher als durch die Vielzahl chemisch unterschiedlicher Hydroxygruppen und Aminogruppen und insbesondere durch die Mitverwendung von Harnstoff eine Abstufung der Reaktivitäten und damit ein mangelhafter polymerer Aufbau zu erwarten wäre.

Die so erhaltenen flüssig-kristallinen Polykondensate werden vorteilhaft nach der Kondensation in der Schmelze in festem Zustand, z.B. bei einer Temperatur von 150 bis 250°C bis zu der gewünschten Viskosität weiter kondensiert. Diese Nachkondensation in fester Phase kann sowohl vor als auch nach einer thermoplastischen Verarbeitung erfolgen. Die Festphasenkondensation führt man vorteilhaft in Inertgasatmosphäre, z.B. Stickstoff durch.

Die Polykondensate gemäß der Erfindung können übliche Zusatz- und Hilfsstoffe in wirksamen Mengen enthalten. Übliche Zusatzstoffe sind Stabilisatoren gegen Abbau durch molekularen Sauerstoff, Wärme oder UV-Licht z.B. sterisch gehinderte Phenole, Hydrochinone, substituierte Resorcine, Salicylate, Benztriazole oder Benzophenone.

Andere geeignete Zusatzstoffe sind Farbstoffe und Pigmente Nigrosin, Titandioxid oder Phthalocyanine.

Geeignete Zusatzstoffe sind auch faser- und pulverförmige Füllstoffe und Verstärkungsmittel in Mengen bis zu 70 Gew.-%, wie Kohlenstoffasern, Glasfasern, amorphe Kieselsäure, Asbest, Calciumsilikat, Aluminiumsilikat, Magnesiumcarbonat, Kreide oder Feldspat.

Die erfindungsgemäßen Polykondensate eignen sich zur Herstellung von Fäden, Folien, Schäumen und technischen Formteilen durch Spritzguß, Pressen oder Extrusion. Die aus den erfindungsgemäßen Polykondensaten hergestellten Formteile zeichnen sich durch hervorragende mechanische Eigenschaften, wie Steifigkeit und Festigkeit aus. Sie sind weitgehend chemikalienresistent und flammwidrig. Zudem besitzen sie eine hohe Wärmeformbeständigkeit und eine glatte abriebfeste Oberfläche. Die erfindungsgemäßen Polykondensate eignen sich daher hervorragend zur Herstellung von Formteilen für die Elektro- und Datentechnik, im Fahrzeugbau und anderen technischen Bereichen. Sie können aber auch als Überzugs- und Beschichtungsmittel pulverförmig dispergiert oder als Film verwendet werden.

Die Erfindung sei an folgenden Beispielen veranschaulicht.

Beispiel 1

0,2 mol Terephthalsäure (30,3 mol.-%), 0,26 mol 4-Hydroxybenzoesäure (39,4 mol.-%), 0,16 mol tert.-Butylhydrochinon (24,2 mol.-%), 0,02 mol 4,4'-Dihydroxybiphenyl (3,05 mol.-%), 0,02 mol Harnstoff (3,05 mol.-%) sowie 0,86 mol Essigsäureanhydrid wurden in einem Kolben mit Rührer, Stickstoffeinleitung und einem Destillationsaufsatz eingewogen und unter $N_2$-Atmosphäre in einem Metallbad auf 100°C erhitzt. Die Temperatur wurde dann in 30' auf 150°C, in weiteren 100' auf 200°C und anschließend in 120' auf die Endtemperatur von 350°C erhöht.

Anschließend wurde der Druck auf 560 mbar und dann alle 10 Minuten auf die Hälfte verringert. Das Endvakuum betrug 10 mbar. Man erhielt so eine hochviskose, fadenbildende Schmelze, die mesomorphe Eigenschaften besitzt. Aus DSC-Messungen ergaben sich eine Glastemperatur von 180°C und eine Schmelztemperatur von 310°C. Oberhalb der Schmelztemperatur existierte eine homogene mesomorphe Phase.

Der Schubmodul zeigte bei 140°C eine Abnahme um 34 des 0°C-Wertes und bei 180°C um 68%. Der E-Modul betrug 18.800 N/mm².

Vergleichsbeispiel 1

0,2 mol Terephthalsäure, 0,26 mol 4-Hydroxybenzoesäure, 0,16 mol tert.-Butylhydrochinon, 0,04 mol 4,4'-Dihydroxybiphenyl sowie 0,86 mol Essigsäureanhydrid wurden wie in Beispiel 1 beschrieben, umgesetzt. Die Endtemperatur betrug 350°C. Der Enddruck war 8 mbar. Aus DSC-Messungen ergab sich eine Glastemperatur von nur 164°C. Oberhalb Tg existierte eine homogene mesomorphe Schmelze.

Der Schubmodul zeigte bei 140°C eine Abnahme von 41%, bezogen auf 0°C-Werte und bei 180°C einen Abfall von 92%. Der E-Modul betrug 17 900 N/mm².

Beispiel 2

0,2 mol Terephthalsäure, 0,24 mol 4-Hydroxybenzoesäure, 0,02 mol 4-Aminobenzoesäure, 0,17 mol tert.-Butylhydrochinon, 0,02 mol 4,4'-Dihydroxybiphenyl, 0,01 mol Harnstoff sowie 0,86 mol Essigsäureanhydrid wurden wie in Beispiel 1 beschrieben umgesetzt. Aus DSC-Messungen ergaben sich eine Glastemperatur von 182°C und eine Schmelztemperatur von 300°C. Oberhalb $T_m$ existierte eine homogene mesomorphe Schmelze. Der Schubmodul zeigte bei 140°C einen Abfall von 34%, bezogen auf den 0°C-Wert und bei 180°C einen Abfal von 68%.

Vergleichsbeispiel 2

0,2 mol Terephthalsäure, 0,24 mol 4-Hydroxybenzoesäure, 0,02 mol 4-Aminobenzoesäure, 0,17 mol tert.-Butylhydrochinon, 0,03 mol 4,4'-Dihydroxybiphenyl sowie 0,86 mol Essigsäureanhydrid wurden wie in Beispiel 1 umgesetzt. Aus DSC-Messungen ergab sich eine Glastemepratur von nur 171°C. Oberhalb Tg existierte eine homogene mesomorphe Schmelze. Der Schubmodul zeigte bei 140°C einen Abfall von 40%, bezogen auf den 0°CWert. Bei 180°C war der Abfall 75%.

Beispiel 3

0,2 mol Terephthalsäure, 0,26 mol 4-Hydroxybenzoesäure, 0,07 mol Hydrochinon, 0,06 mol 3-Aminophenol, 0,06 mol 4,4'-Dihydroxybiphenyl und 0,01 mol Harnstoff sowie 0,86 mol Essigsäureanhydrid wurden wie in Beispiel 1 umgesetzt. Aus DSC-Messungen ergab sich eine Glastemperatur von 148°C und eine Schmelztemperatur von Tm = 280°C (Peakmaximum) mit einem breiten Schmelzbereich bis 320°C. Der Schubmodul fiel bei 140°C auf 42%, bei 180°C auf 88% des 0°C-Wertes ab.

Vergleichsbeispiel 3

0,2 mol Terephthalsäure, 0,26 mol 4-Hydroxybenzoesäure, 0,07 mol Hydrochinon, 0,06 mol 3-Aminophenol, 0,07 mol 4,4'-Dihydroxybiphenyl sowie 0,86 mol Essigsäureanhydrid wurden wie in Beispiel 1 umgesetzt. Aus DSC-Messungen ergab sich eine Glastemperatur von 154°C. Der Schubmodul fiel bei 140°C auf 59% seines 0°C-Wertes ab und bei 180°C auf 92%.

Beispiel 4

0,1 mol Terephthalsäure, 0,1 mol der wiederkehrenden Einheiten

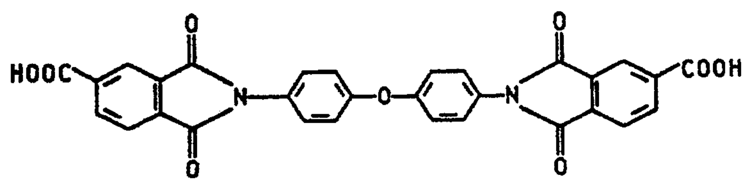

0,26 mol 4-Hydroxybenzoesäure, 0,07 mol Hydrochinon, 0,04 mol 4,4'-Dihydroxybiphenyl, 0,08 mol 2,7-Dihydroxynaphthalin, 0,01 mol Harnstoff sowie 0,86 mol Essigsäureanhydrid wurden wie in Beispiel 1 umgesetzt. Aus DSC-Messungen ergab sich eine Glastemperatur von 155°C und eine Schmelztemperatur von 280°C.

Vergleichsbeispiel 4

In einer Zusammensetzung wie in Beispiel 4 beschrieben wurden die Harnstoffeinheiten (0,01 mol) durch 2,7-Dihydroxynaphthalin (0,01 mol) ersetzt und wie in Beispiel 1 beschrieben umgesetzt. Aus DSC-Messungen ergab sich eine Glastemperatur von 156°C. Oberhalb Tg existierte eine homogene mesomorphe Schmelze.

Der Schubmodul fiel bei 140°C auf 50% seines 0°C-Wertes ab und bei 150°C bereits um mehr als 95%.

| Beispiel | Tg | $T_m$ | Abnahme Schubmodul 0-140°C | 0-180°C | Abnahme Schubmodul auf 50% des 0°C-Wertes | E-Modul |
|---|---|---|---|---|---|---|
| 1 | 180°C | 310°C | 34% | 68% | 170°C | 18.800 |
| V1 | 164°C | – | 41% | 92% | 155°C | 17.900 |
| 2 | 182°C | 300°C | 34% | 68% | 165°C | |
| V2 | 171°C | – | 40% | 75% | 155°C | |
| 3 | 148°C | 280°C | 42% | 88% | 140°C | |
| V3 | 154°C | – | 59% | 92% | 130°C | |
| 4 | 155°C | 280°C | 35% | – | 150°C | |
| V4 | 156°C | – | 50% | – | 140°C | |

## Patentansprüche für die Vertragsstaaten: BE, CH, DE, FR, GB, IT, LI, LU, NL, SE

1. Flüssig-kristalline Carbamidgruppen enthaltende Polykondensate, aufgebaut aus
a) aromatischen Hydroxy- und/oder Aminocarbonsäuren, in denen die Hydroxy- oder Aminogruppe nicht vicinal zur Carboxylgruppe stehen
b) 0,1 bis 20 Mol.-% Harnstoff
c) aromatischen Dihydroxy-, Diamino- und/oder Hydroxy-Aminoverbindungen, in denen die Hydroxy- und Aminogruppen nicht vicinal zueinander angeordnet sind

d) einer der Summe der Komponenten b und c äquivalenten molaren Menge an aromatischen Dicarbonsäuren, in denen die Carboxylgruppen nicht vicinal angeordnet sind.

2. Flüssig-kristalline Carbamidgruppen enthaltende Polykondensate nach Anspruch 1, aufgebaut aus

a) mindestens 10 Mol.-% mindestens einer der wiederkehrenden Einheiten der Formeln I und/oder II

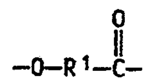

I

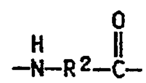

II

in denen $R^1$ und $R^2$ gleich oder verschieden sein können und jeweils einen 1,4-Phenylen-, 1,3-Phenylenrest, 2,7-Naphthylen- oder 2,6-Naphthylenrest bezeichnen

b) 0,1 bis 20 Mol.-% wiederkehrenden Einheiten der Formel III

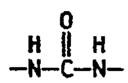

III

c) mindestens einer der wiederkehrenden Einheiten der Formel IV

$-X-R^3-Y-$ IV

in der $R^3$ einen 1,4-Phenylen-, 1,3-Phenylen-, 2,6-Naphthylen-, 2,7-Naphthylen-, 4,4'-Biphenylen-, 3,4'-Biphenylen, 2,6-Anthrachinoylen-rest bezeichnet, wobei die Reste auch Halogenatome, Alkylreste mit 1 bis 4 Kohlenstoffatomen oder einen Phenylrest als Substituenten haben können und darüber hinaus $R^3$ auch für den Rest

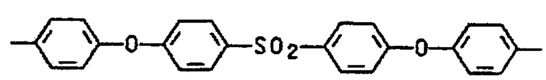

steht und X und Y gleich oder verschieden sein können und jeweils für ein Sauerstoffatom oder den Rest –NH– stehen,

d) einer der Summe aus den Komponenten b und c äquivalenten Menge an wiederkehrenden Einheiten der Formel V

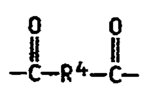

V

in der $R^4$ für einen 1,4-Phenylen-, 1,3-Phenylen-rest oder Reste der Formeln VI und/oder VII

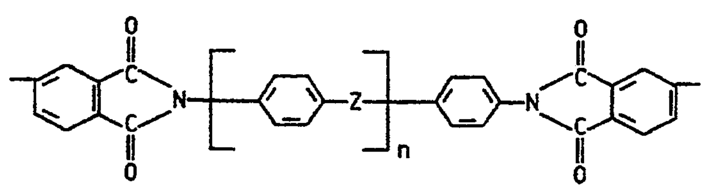

VI

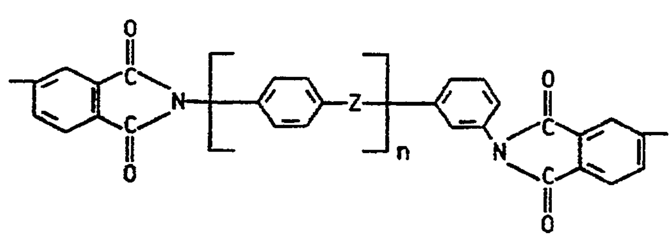

VII

in der Z gleich oder verschieden sein kann und jeweils für $-O-$, $-S-$, $-SO_2-$, $-CO-$, $-CH_2-$, $=C(CH_3)_2$ steht und n 0 oder 1 bedeutet, bezeichnet oder $R^4$ auch für Reste der Formel VIII bis X

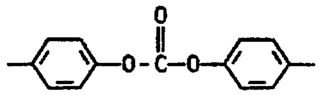 VIII

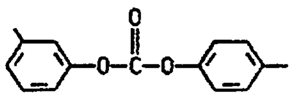 IX

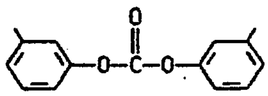 X

steht, wobei die Summe der Molprozente der Komponenten a, b, c und d jeweils 100 Mol.-% ergibt.

3. Flüssig-kristalline Carbamidgruppen enthaltende Polykondensate nach den Ansprüchen 1 und 2, dadurch gekennzeichnet, daß sie eine Glasübergangstemperatur Tg ≥ 140°C haben.

4. Flüssig-kristalline Carbamidgruppen enthaltende Polykondensate nach den Ansprüchen 1 bis 3, dadurch gekennzeichnet, daß sie bei einer Temperatur > 220°C und ≤ 380°C Teilkristallinität aufweisen.

5. Verfahren zur Herstellung von Polykondensaten nach den Ansprüchen 1 bis 4, dadurch gekennzeichnet, daß man die Monomeren in Form der underivatisierten Hydroxy-, Amino- bzw. Carboxyverbindungen in einem Einstufenverfahren in den beschriebenen Molverhältnissen unter Zusatz von überschüssigem Fettsäureanhydrid bei erhöhter Temperatur umsetzt und Fettsäureanhydrid und Fettsäure aus dem Reaktionsgemisch abdestilliert.

6. Verfahren nach Anspruch 5, dadurch gekennzeichnet, daß man die Polykondensate nach der Kondensation in der Schmelze durch Kondensation in fester Phase bei einer Temperatur von 150 bis 250°C nachkondensiert.

7. Verwendung von Polykondensaten nach den Ansprüchen 1 bis 6 zur Herstellung von Fasern, Folien und Formteilen.

**Patentansprüche für den Vertragsstaat: AT**

1. Verfahren zur Herstellung von flüssig-kristalline Carbamidgruppen enthaltenden Polykondensaten durch Umsetzen von

a) aromatischen Hydroxy- und/oder Aminocarbonsäuren, in denen die Hydroxy- oder Aminogruppe nicht vicinal zur Carboxylgruppe stehen

b) 0,1 bis 20 Mol.-% Harnstoff

c) aromatischen Dihydroxy-, Diamino- und/oder Hydroxy-Aminoverbindungen, in denen die Hydroxy- und Aminogruppen nicht vicinal zueinander angeordnet sind

d) einer der Summe der Komponenten b und c äquivalenten molaren Menge an aromatischen Dicarbonsäuren, in denen die Carboxylgruppen nicht vicinal angeordnet sind.

oder der Ester bildenden Derivate der Komponenten a bis d.

2. Verfahren nach Anspruch 1, dadurch gekennzeichnet, daß die flüssig-kristallinen Carbamidgruppen enthaltenden Polykondensate aufgebaut sind aus

a) mindestens 10 Mol.-% mindestens einer der wiederkehrenden Einheiten der Formeln I und/oder II

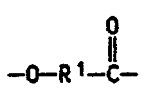 I

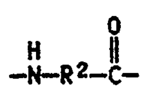 II

in denen $R^1$ und $R^2$ gleich oder verschieden sein können und jeweils einen 1,4-Phenylen-, 1,3-Phenylenrest, 2,7-Naphthylen- oder 2,6-Naphthylenrest bezeichnen

b) 0,1 bis 20 Mol.-% wiederkehrenden Einheiten der Formel III

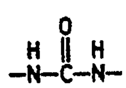 III

c) mindestens einer der wiederkehrenden Einheiten der Formel IV

$-X-R^3-Y-$ IV

in der $R^3$ einen 1,4-Phenylen-, 1,3-Phenylen-, 2,6-Naphthylen-, 2,7-Naphthylen-, 4,4'-Piphenylen-, 3,4'-Biphenylen, 2,6-Anthrachinoylen-rest bezeichnet, wobei die Reste auch Halogenatome, Alkylreste mit 1 bis 4 Kohlenstoffatomen oder einen Phenylrest als Substituenten haben können und darüber hinaus $R^3$ auch für den Rest

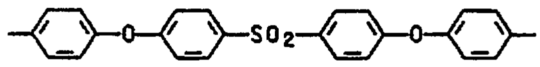

steht und X und Y gleich oder verschieden sein können und jeweils für ein Sauerstoffatom oder den Rest –NH– stehen,

d) einer der Summe aus den Komponenten b und c äquivalenten Menge an wiederkehrenden Einheiten der Formel V

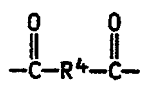

V

in der $R^4$ für einen 1,4-Phenylen-, 1,3-Phenylen-rest oder Reste der Formeln VI und/oder VII

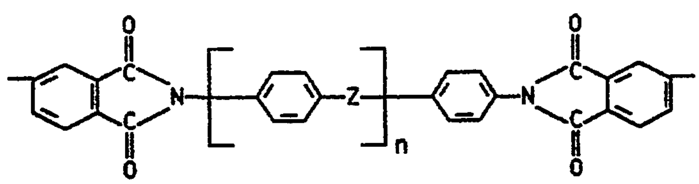

VI

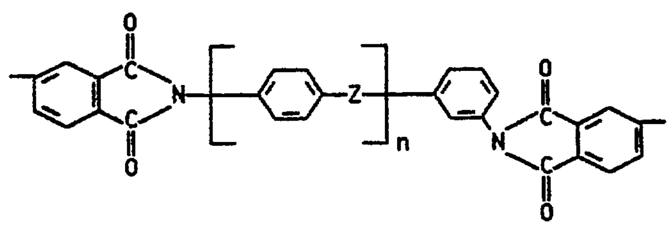

VII

in der Z gleich oder verschieden sein kann und jeweils für –O–, –S–, $-SO_2-$, –CO–, $-CH_2-$, $= C(CH_3)_2$ steht und n 0 oder 1 bedeutet, bezeichnet oder $R^4$ auch für Reste der Formel VIII bis X

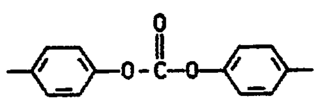

VIII

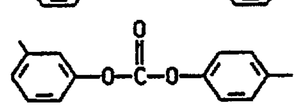

IX

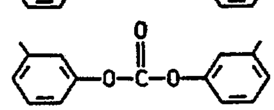

X

steht, wobei die Summe der Molprozente der Komponenten a, b, c und d jeweils 100 Mol.-% ergibt.

3. Verfahren nach den Ansprüchen 1 bis 2, dadurch gekennzeichnet, daß die flüssig-kristallinen Carbamidgruppen enthaltenden Polykondensate eine Glasübergangstemperatur Tg ≥ 140°C haben.

4. Verfahren nach den Ansprüchen 1 bis 3, dadurch gekennzeichnet, daß die flüssig-kristallinen Carbamidgruppen enthaltenden Polykondensate bei einer Temperatur > 220°C und ≤ 380°C Teilkristallinität aufweisen.

5. Verfahren nach den Ansprüchen 1 bis 4, dadurch gekennzeichnet, daß man die Monomeren in Form der underivatisierten Hydroxy-, Amino- bzw. Carboxyverbindungen in einem Einstufenverfahren in den beschriebenen Molverhältnissen unter Zusatz von überschüssigem Fettsäureanhydrid bei erhöhter Temperatur umsetzt und Fettsäureanhydrid und Fettsäure aus dem Reaktionsgemisch abdestilliert.

6. Verfahren nach den Ansprüchen 1 bis 5, dadurch gekennzeichnet, daß man die Polykondensate nach der Kondensation in der Schmelze durch Kondensation in fester Phase bei einer Temperatur von 150 bis 250°C nachkondensiert.

7. Verwendung von Polykondensaten nach den Ansprüchen 1 bis 6 zur Herstellung von Fasern, Folien und Formteilen.

**Claims for the Contracting States: BE, CH, DE, FR, GB, IT, LI, LU, NL and SE**

1. A liquid-crystalline carbamyl-containing polycondensate composed of
a) aromatic hydroxycarboxylic and/or aminocarboxylic acids in which the hydroxyl and amino groups are not vicinal to the carboxyl group,
b) from 0.1 to 20 mol % of urea,
c) aromatic dihydroxy, diamino and/or hydroxy-amino compounds in which the hydroxyl and amino groups are not vicinal and
d) a molar amount equivalent to the total amount of components b and c of an aromatic dicarboxylic acid in which the carboxyl groups are not vicinal.
2. A liquid-crystalline carbamyl-containing polycondensate as claimed in claim 1, composed of
a) not less than 10 mol % of one or more of the repeat units of the formula I and/or II

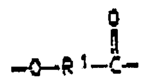 I

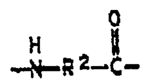 II

where $R^1$ and $R^2$ can be identical or different and each is 1,4-phenylene, 1,3-phenylene, 2,7-naphthylene or 2,6-naphthylene,
b) from 0.1 to 20 mol % of repeat units of the formula III

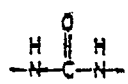 III

c) one or more of the repeat units of the formula IV

$-X-R^3-Y-$ IV

where $R^3$ is 1,4-phenylene, 1,3-phenylene, 2,6-naphthylene, 2,7-naphthylene, 4,4′-biphenylene, 3,4′-biphenylene, or 2,6-anthraquinoylene, which may all be substituted by halogen, alkyl of 1 to 4 carbon atoms or phenyl, or $R^3$ is

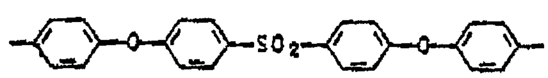

and X and Y can be identical or different and each is oxygen or –NH–, and
d) an amount equivalent to the total amount of components b and c of repeat units of the formula V

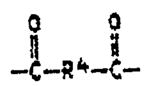 V

where $R^4$ is 1,4-phenylene, 1,3-phenylene or a radical of the formula VI and/or VII

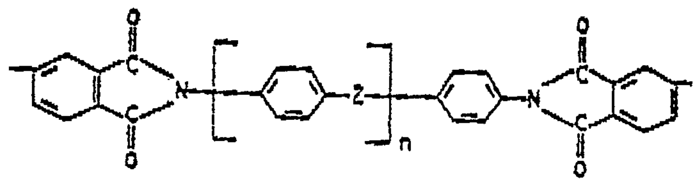

VI

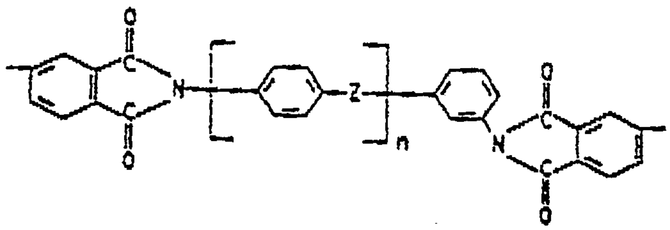

VII

where each Z is identical or different and is –O–, –S–, $-SO_2-$, –CO–, $-CH_2-$ or = $C(CH_3)_2$, and n is 0 or 1, or $R^4$ is a radical of the formula VIII, IX or X

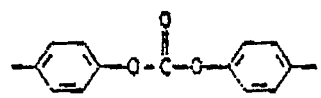

VIII

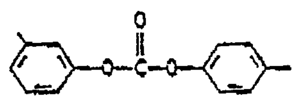

IX

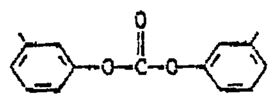

X,

the mol percentages of components a, b, c and d adding up to 100 mol % in each case.

3. A liquid-crystalline carbamyl-containing polycondensate as claimed in either of claims 1 and 2, which has a glass transition temperature Tg ≥ 140°C.

4. A liquid-crystalline carbamyl-containing polycondensate as claimed in any of claims 1 to 3, which has partial crystallinity at > 220°C and ≤ 380°C.

5. A process for preparing a polycondensate as claimed in any one of claims 1 to 4 by reacting the monomers in the form of the underivatized hydroxy, amino and carboxy compounds in a single-stage process in the molar ratios described in the presence of excess fatty acid anhydride at elevated temperatures and distilling fatty acid anhydride and fatty acid out of the reaction mixture.

6. A process as claimed in claim 5, wherein, after the condensation in the melt, the polycondensate is postcondensed by condensation in the solid phase at 150–250°C.

7. The use of a polycondensate as claimed in any of claims 1 to 6 for preparing fibers, films and moldings.

**Claims for the Contracting State: AT**

1. A process for preparing a liquid-crystalline carbamyl-containing polycondensate by reacting

a) aromatic hydroxycarboxylic and/or aminocarboxylic acids in which the hydroxyl and amino groups are not vicinal to the carboxyl group,

b) from 0.1 to 20 mol % of urea,

c) aromatic dihydroxy, diamino and/or hydroxy-amino compounds in which the hydroxyl and amino groups are not vicinal and

d) a molar amount equivalent to the total amount of components b and c of an aromatic dicarboxylic acid in which the carboxyl groups are not vicinal or the ester-forming derivatives of components a to d.

2. A process as claimed in claim 1, wherein the liquid-crystalline carbamyl-containing polycondensate is composed of

a) not less than 10 mol % of one or more of the repeat units of the formula I and/or II

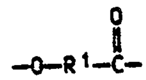
I

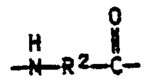
II

where $R^1$ and $R^2$ can be identical or different and each is 1,4-phenylene, 1,3-phenylene, 2,7-naphthylene or 2,6-naphthylene,
b) from 0.1 to 20 mol % of repeat units of the formula III

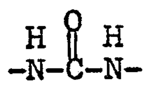
III

c) one or more of the repeat units of the formula IV

$-X-R^3-Y-$ IV

where $R^3$ is 1,4-phenylene, 1,3-phenylene, 2,6-naphthylene, 2,7-naphthylene, 4,4'-biphenylene, 3,4'-biphenylene, or 2,6-anthraquinoylene, which may all be substituted by halogen, alkyl of 1 to 4 carbon atoms or phenyl, or $R^3$ is

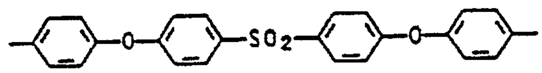

and X and Y can be identical or different and each is oxygen or –NH–, and
d) an amount equivalent to the total amount of components b and c of repeat units of the formula V

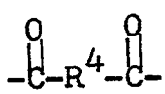
V

where $R^4$ is 1,4-phenylene, 1,3-phenylene or a radical of the formula VI and/or VII

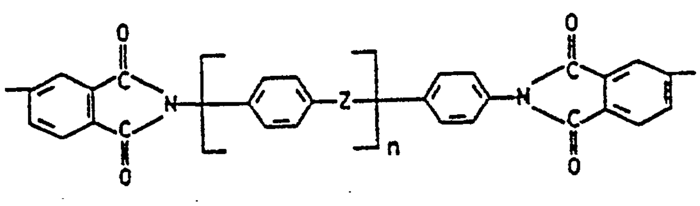
VI

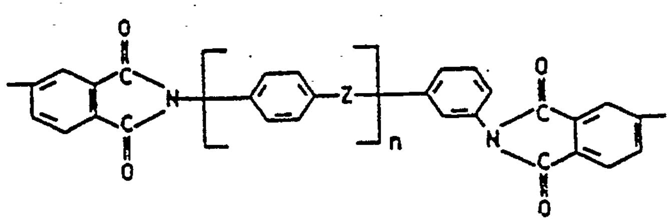
VII

where each Z is identical or different and is –O–, –S–, $-SO_2-$, –CO–, $-CH_2-$ or $= C(CH_3)_2$, and n is 0 or 1, or $R^4$ is a radical of the formula VIII, IX or X

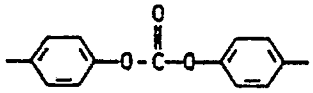
VIII

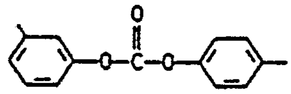
IX

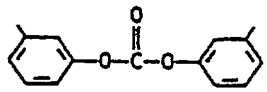
X

the mol percentages of components a, b, c and d adding up to 100 mol % in each case.

3. A process as claimed in either of claims 1 and 2, wherein the liquid-crystalline carbamyl-containing polycondensate has a glass transition temperature $Tg \geq 140°C$.

4. A process as claimed in any of claims 1 to 3, wherein the liquid-crystalline carbamyl-containing polycondensate has partial crystallinity at > 220°C and ≤ 380°C.

5. A process as claimed in any of claims 1 to 4 which comprises reacting the monomers in the form of the underivatized hydroxy, amino and carboxy compounds in a single-stage process in the molar ratios described in the presence of excess fatty acid anhydride at elevated temperatures and distilling fatty acid anhydride and fatty acid out of the reaction mixture.

6. A process as claimed in any of claims 1 to 5, wherein, after the condensation in the melt, the polycondensate is post-condensed by condensation in the solid phase at 150–250°C.

7. The use of a polycondensate as claimed in any of claims 1 to 6 for preparing fibers, films and moldings.

**Revendications pour les Etats contractants: BE, CH, DE, FR, GB, IT, LI, LU, NL et SE**

1. Polycondensats contenant des radicaux carbamide, liquides-cristallins, constitués

a) d'acides hydroxy- et/ou aminocarboxyliques, aromatiques, dans lesquels le radical hydroxyle ou amino ne se trouve pas en position vicinale par rapport au radical carboxyle,

b) de 0,1 à 20% molaires d'urée,

c) de composés dihydroxy-, diamino- et/ou hydroxyamino, aromatiques, dans lesquels les radicaux hydroxyle et amino ne sont pas disposés de manière vicinale les uns par rapport aux autres,

d) d'une proportion molaire équivalant à la somme des composants b et c d'acides dicarboxyliques, aromatiques, dans lesquels les radicaux carboxyle ne sont pas disposés de manière vicinale, ou des dérivés estérogènes des composants a à d.

2. Polycondensats contenant des radicaux carbamide, liquides-cristallins, selon la revendication 1, constitués

a) d'au moins 10% molaires d'au moins l'une des unités récurrentes des formules I et/ou II

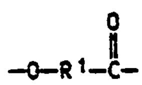
I

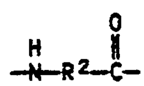
II

dans lesquelles $R^1$ et $R^2$ peuvent être identiques ou différents et représentent chacun un radical 1,4-phénylène, 1,3-phénylène, 2,7-naphtylène ou 2,6-naphthylène,

b) de 0,1 à 20% molaires d'unités récurrentes de la formule III

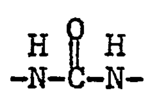
III

c) d'au moins l'une des unités récurrentes de la formule IV

$-X-R^3-Y-$ IV

dans laquelle $R^3$ représente un radical 1,4-phénylène, 1,3-phénylène, 2,6-naphthylène, 2,7-naphthylène, 4,4'-biphénylène, 3,4'-biphénylène, 2,6-anthraquinoylène, où les radicaux peuvent également

comporter, à titre de substituants, des atomes d'halogènes, des radicaux alkyle possédant de 1 à 4 atomes de carbone ou un radical phényle et, de surcroît, $R^3$ peut également représenter le radical

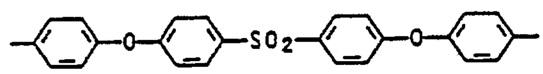

et X et Y peuvent être identiques ou différents et représentent chacun un atome d'oxygène ou le radical –NH–,

d) d'une proportion équivalant à la somme des composants b et c d'unités récurrentes de la formule V

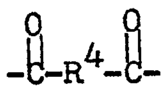

V

dans laquelle $R^4$ représente un radical 1,4-phénylène, 1,3-phénylène ou des radicaux des formules VI et/ou VII

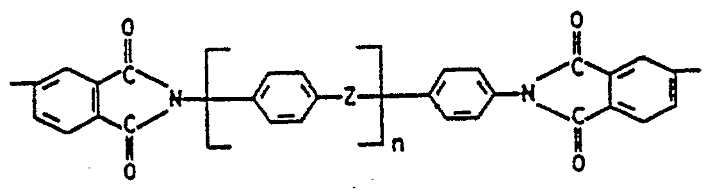

VI

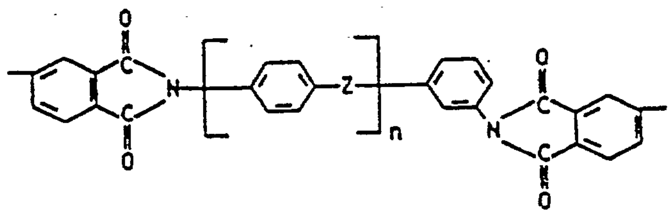

VII

dans lesquelles les symboles Z peuvent être identiques ou différents et représentent chacun des radicaux –O–, –S–, $-SO_2-$, –CO–, $-CH_2-$, = $C(CH_3)_2$ et n est égal à 0 ou à 1, ou bien $R^4$ représente également des radicaux des formules VIII à X

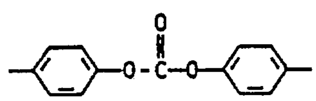

VIII

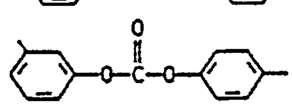

IX

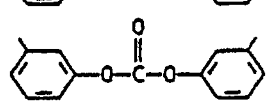

X

où la somme des pourcentages molaires des composants a, b, c et d parfait à chaque fois 100% molaires.

3. Polycondensats contenant des radicaux carbamide, liquides-cristallins, selon les revendications 1 et 2, caractérisés en ce qu'ils possèdent une température de transition vitreuse Tg égale ou supérieure à 140°C.

4. Polycondensats contenant des radicaux carbamide, liquides-cristallins, selon les revendications 1 à 3, caractérisés en ce qu'ils possèdent une cristallinité partielle à une température supérieure à 220°C et égale ou inférieure à 380°C.

5. Procédé de préparation de polycondensats selon les revendications 1 à 4, caractérisé en ce que l'on fait réagir les monomères sous forme des composés du type hydroxy, amino ou carboxy non transformés en dérivés, au cours d'un procédé en une étape, dans les proportions molaires décrites, en recourant à l'addition d'anhydride d'acide gras excédentaire, à température élevée et on chasse par distillation l'anhydride d'acide gras et l'acide gras du mélange réactionnel.

6. Procédé selon la revendication 5, caractérisé en ce que l'on soumet les polycondensats, après la condensation à l'état fondu, à une postcondensation par condensation en phase solide, à une température de 150 à 250°C.

7. Utilisation des polycondensats selon les revendications 1 à 6, pour la fabrication de fils, de feuilles et d'articles moulés.

**Revendications pour l'Etat contractant: AT**

1. Procédé de préparation de polycondensats contenant des radicaux carbamide, liquides-cristallins, par la réaction

a) d'acides hydroxy- et/ou aminocarboxyliques, aromatiques, dans lesquels le radical hydroxyle ou amino ne se trouve pas en position vicinale par rapport au radical carboxyle,

b) de 0,1 à 20% molaires d'urée,

c) de composés dihydroxy-, diamino- et/ou hydroxyamino, aromatiques, dans lesquels les radicaux hydroxyle et amino ne sont pas disposés de manière vicinale les uns par rapport aux autres,

d) d'une proportion molaire équivalent à la somme des composants b et c d'acides dicarboxyliques, aromatiques, dans lesquels les radicaux carboxyle ne sont pas disposés de manière vicinale, ou des dérivés estérogènes des composants a à d.

2. Procédé suivant la revendication 1, caractérisé en ce que les polycondensats contenant des radicaux carbamide, liquides-cristallins, sont constitués

a) d'au moins 10% molaires d'au moins l'une des unités récurrentes des formules I et/ou II

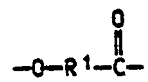
I

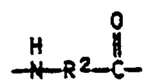
II

dans lesquelles $R^1$ et $R^2$ peuvent être identiques ou différents et représentent chacun un radical 1,4-phénylène, 1,3-phénylène, 2,7-naphtylène ou 2,6-naphthylène,

b) de 0,1 à 20% molaires d'unités récurrentes de la formule III

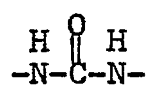
III

c) d'au moins l'une des unités récurrentes de la formule IV

$-X-R^3-Y-$ IV

dans laquelle $R^3$ représente un radical 1,4-phénylène, 1,3-phénylène, 2,6-naphthylène, 2,7-naphthylène, 4,4'-biphénylène, 3,4'-biphénylène, 2,6-anthraquinoylène, où les radicaux peuvent également comporter, à titre de substituants, des atomes d'halogènes, des radicaux alkyle possédant de 1 à 4 atomes de carbone ou un radical phényle et, de surcroît, $R^3$ peut également représenter le radical

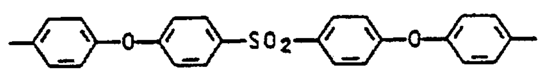

et X et Y peuvent être identiques ou différents et représentent chacun un atome d'oxygène ou le radical -NH-,

d) d'une proportion équivalant à la somme des composants b et c d'unités récurrentes de la formule V

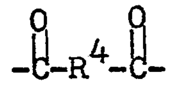
V

dans laquelle $R^4$ représente un radical 1,4-phénylène, 1,3-phénylène ou des radicaux des formules VI et/ou VII

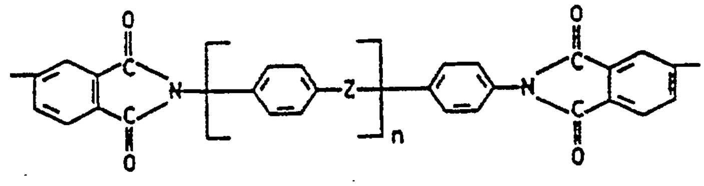

VI

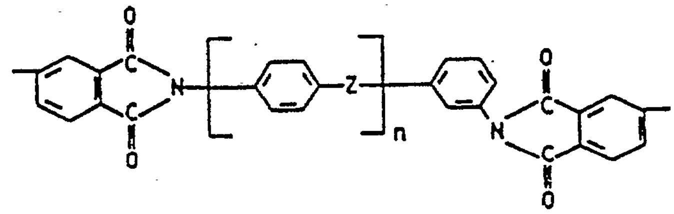

VII

dans lesquelles les symboles Z peuvent être identiques ou différents et représentent chacun des radicaux –O–, –S–, $-SO_2-$, –CO–, $-CH_2-$, = $C(CH_3)_2$ et n est égal à 0 ou à 1, ou bien $R^4$ représente également des radicaux des formules VIII à X

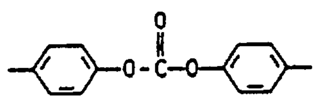

VIII

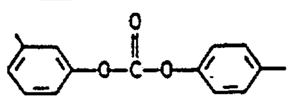

IX

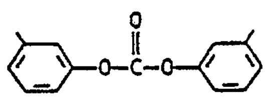

X

où la somme des pourcentages molaires des composants a, b, c et d parfait à chaque fois 100% molaires.

3. Procédé suivant les revendications 1 et 2, caractérisé en ce que les polycondensats contenant des radicaux carbamide, liquides-cristallins, possèdent une température de transition vitreuse Tg égale ou supérieure à 140°C.

4. Procédé suivant les revendications 1 à 3, caractérisé en ce que les polycondensats contenant des radicaux carbamide, liquides-cristallins, possèdent une cristallinité partielle à une température supérieure à 220°C et égale ou inférieure à 380°C.

5. Procédé suivant les revendications 1 à 4, caractérisé en ce que l'on fait réagir les monomères sous forme des composés du type hydroxy, amino ou carboxy non transformés en dérivés, au cours d'un procédé en une étape, dans les proportions molaires décrites, en recourant à l'addition d'anhydride d'acide gras excédentaire, à température élevée et on chasse par distillation l'anhydride d'acide gras et l'acide gras du mélange réactionnel.

6. Procédé suivant les revendications 1 à 5, caractérisé en ce que l'on soumet les polycondensats, après la condensation à l'état fondu, à une postcondensation par condensation en phase solide, à une température de 150 à 250°C.

7. Utilisation des polycondensats selon les revendications 1 à 6, pour la fabrication de fils, de feuilles et d'articles moulés.